# EUROPEAN PATENT SPECIFICATION

(11) **EP 1 453 771 B1**
(45) Date of publication and mention of the grant of the patent: **14.07.2010**
(21) Application number: 02783266.6
(22) Date of filing: 04.12.2002
(51) Int. Cl.: C03C 17/34, C03C 17/36, C03C 4/02

(54) **SELF-CLEANING GLAZING SHEET**
SELBSTREINIGENDE SCHEIBE FÜR VERGLASUNGEN
FEUILLE DE VITRAGE AUTONETTOYANTE

(30) Priority: 08.12.2001 GB 0129434
(43) Date of publication of application: 08.09.2004
(73) Proprietor: Pilkington Group Limited, St. Helens Merseyside WA10 3TT (GB)
(72) Inventor: SANDERSON, Kevin David, Wigan, Lancashire WN8 0BQ (GB); KNOWLES, James Atherton, Bristol, Avon BS40 8EU (GB)
(74) Representative: Hazzard, Alan David
(86) International application number: PCT/GB2002/005478
(87) International publication number: WO 2003/050056

(56) References cited:
- EP-A- 0 820 967
- WO-A-01/25161
- WO-A-01/87593
- WO-A-97/10186
- US-A- 5 643 436
- US-A- 6 071 623
- PATENT ABSTRACTS OF JAPAN vol. 1998, no. 01, 30 January 1998 (1998-01-30) & JP 09 255366 A (GUNMA TOOBI:KK), 30 September 1997 (1997-09-30)

## Description

This invention relates to self-cleaning glazing sheets, to multiple glazing units or laminates comprising self-cleaning glazing sheets and windows and facades comprising self cleaning glazing sheets.

Self-cleaning glazing sheets have a hydrophilic surface. Rain or other water which contacts the hydrophilic surface will spread over the surface and wash dirt away from it. It is beneficial to glaze windows with self-cleaning glazing sheets because they require less cleaning than ordinary windows. Self-cleaning glazing sheets may be plastic sheets, but are more usually glass sheets. The self-cleaning surface is usually provided by a hydrophilic coating on the glazing sheet. The coating may, for example, be of silicon oxide or a metal oxide.

A particularly useful type of self-cleaning glazing sheet is one whose hydrophilic coating is photocatalytically active. Photocatalytic activity arises by the photogeneration, in a semiconductor, of a hole-electron pair when the semiconductor is illuminated by light of a particular frequency. The hole-electron pair can be generated in sunlight and can react in humid air to form hydroxy and peroxy radicals on the surface of the semiconductor. The radicals oxidise organic grime on the surface. Photocatalytically active coatings when illuminated thus tend to destroy organic grime on the surface. They also tend to maintain their hydrophilic properties because of the active cleaning of the surface as a consequence of illumination. Photocatalytically active coatings may comprise a semi-conductor with a suitable band gap, for example, titanium oxide.

Titanium oxide photocatalytic coatings on glass are disclosed in EP 0 901 991 A2, WO 97/07069, WO 97/10186, WO 98/06675, WO 98/41480, WO 00/75087, in Abstract 735 of 187th Electrochemical Society Meeting (Reno, NV, 95-1, p.1102) and in New Scientist magazine (26 August 1995, p.19).

It would be advantageous to maintain the hydrophilic nature of surfaces at a level higher than that presently achieved so as to increase the effectiveness of the self cleaning properties. For a photocatalytically active coating, this could entail increasing the photocatalytic activity of the surface.

The present invention accordingly provides, in a first aspect, a self-cleaning glazing sheet as set out in claim 1 attached hereto.

Surprisingly, raising the temperature of the substrate results in the activity of the coating increasing which results in an improvement in the self-cleaning properties of the coating.

Hydrophilic coatings generally have static water contact angles of 40° or lower preferably 25 ° or lower. The hydrophilic coating is a photocatalytically active coating. The substrate preferably has a direct solar heat absorption of 0.15 or greater. More preferably, however, the substrate will have a direct solar heat absorption of 0.2 or greater, 0.25 or greater, 0.3 or greater, 0.35 or greater, or 0.4 or greater. The substrate is preferably a float glass substrate. Tinted glass substrates may be formed by adding colourants to base glass compositions. Such colourants include iron oxide which may be added to a base glass composition in an amount of 0.1 to 0.9 weight percent, preferably 0.4 to 0.9 weight percent (Fe₂O₃).

The self-cleaning glazing sheets of the invention may be used in multiple glazing units comprising the self-cleaning glazing sheet in opposed orientation to a second glazing sheet.
Self-cleaning glazing sheets may also be incorporated in laminates (especially laminated glass).

Self-cleaning glazing sheets, multiple glazing units and laminates as described above can be incorporated in windows for buildings or vehicles. Self-cleaning glass sheets, multiple glazing units and laminates as described above can also be incorporated in façades for buildings.

By way of example, embodiments of the invention will now be described with reference to the accompanying drawings in which:
Figure 1 is a graph of rate of reaction of a photocatalytically active coating of titanium oxide on glass as a function of temperature.
Figure 2 illustrates schematically in section (and not to scale) a self-cleaning glazing sheet according to the present invention.
Figure 3 illustrates schematically in section (and not to scale) a multiple glazing unit comprising a self-cleaning glazing sheet.

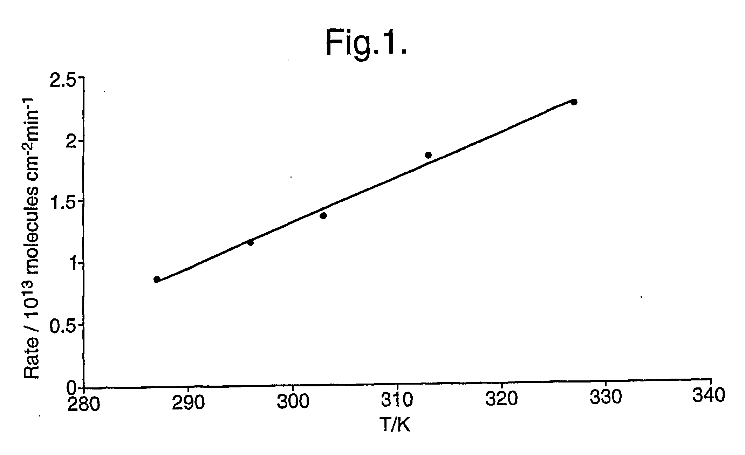

The data for Figure 1 were obtained using a clear float glass substrate provided with a coating having an alkali blocking under-layer of silica and a photocatalytically active coating of titanium oxide deposited over the silica layer. The silica and titanium oxide layers were deposited by chemical vapour deposition on the glass surface during the float glass production process; the silica coating from a precursor gas mixture comprising silane, ethylene and oxygen, the titanium oxide layer from a precursor gas mixture comprising titanium chloride and ethyl acetate (generally as described in WO 00/75087).

To measure the photocatalytic activity of the coated glass, stearic acid films were deposited on the photocatalytically active surface by taking a 1 x 10⁻² mol dm⁻³ stock solution of stearic acid in methanol and pipetting 3x10⁻² cm³ onto the TiO₂ coated surface of the glass slide. This was then spun at 1000 rpm for 2 min on an Electronic Microsystems Ltd spin coater and subsequently left in an air stream for about 30 min to ensure the complete removal of methanol. The photoactivity of the films were determined by the measuring the characteristic integrated absorbance of the C-H infrared stretching vibrations of stearic acid between 2700 cm⁻¹ and 3000 cm⁻¹ as a function of irradiation time using a Perkin Elmer 1725 Fourier Transform Infrared spectrometer (FTIR). Literature values based on the integrated absorbance of homologs having a known area per molecule (such as arachidic acid (CH₃. (CH₂)₁₈CO₂H) give a value of 3.17 x 10¹⁵ stearic acid molecules cm⁻² for each abs. cm⁻¹ unit measured (as discussed in Y. Paz, Z. Luo, L. Razenberg, A. Heller, J. Mater. Res., 1995, 10, 2842.). Surface concentrations of stearic acid were calculated on this basis.

Irradiation was done using a photochemical reactor comprising a half cylinder irradiation unit containing six 8W Black Light bulbs (Coast-Air; radiation λ(max) = 355-360 nm; length, 28.7 cm) set against a half cylinder aluminium reflector. In order to determine the effect of temperatures, coated glass samples were mounted on a thermostatted cell and the temperature was varied between 14 and 53°C (287 and 327 K). Figure 1 shows the rate of stearic acid photooxidation as a function of temperature. From these results it was clear that increasing the temperature increases the rate of reaction.

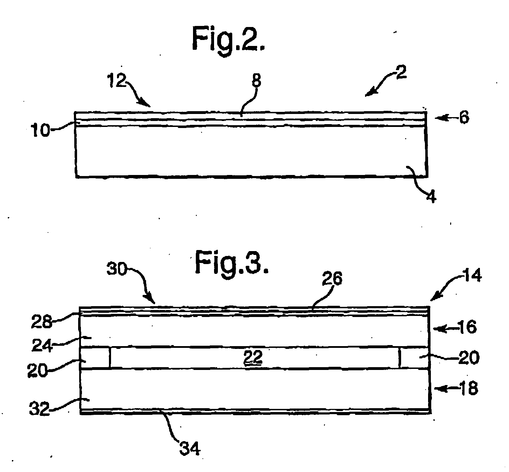

Figure 2 shows a self-cleaning glazing sheet 2 comprising a dark green tinted float glass substrate 4 having a two layer coating 6 on one surface. The float glass substrate 4 has a base composition of a soda lime silica glass with about 0.9 weight percent iron oxide as colourant, as described in Tables 1 and 2 below. The upper layer 8 of the coating 6 is a photocatalytically active layer of titanium oxide. The lower layer 10 of the coating 6 is a layer of silica which acts as an alkali blocking layer to reduce or prevent the migration of alkali metal ions into the upper layer 8 of the coating 6 which may reduce its photocatalytic activity. When the glazing sheet 2 is exposed to radiant energy (for example sunlight) the tinted float glass substrate 4 absorbs a part of that energy and the temperature of the glazing sheet 2 rises. The temperature rise has the effect of enhancing the self-cleaning properties of the coated surface 12 of the glazing sheet by increasing the photocatalytic activity of the photocatalytically active layer 8. The temperature rise may also make the surface more hydrophilic.

Figure 3 shows a double glazing unit 14 comprising a self-cleaning glazing sheet 16 and a second glazing sheet 18 mounted in opposed orientation to it. The self-cleaning glazing sheet 16 and the second glazing sheet 18 are separated by a spacer 20 to leave an air gap 22 to improve the insulation of the unit. The self-cleaning glazing sheet 16 is similar to that illustrated in Figure 2, comprising a float glass substrate 24 having a two layer coating on one surface. The upper layer 26 of the coating is a photocatalytically active layer of titanium oxide and the lower layer 28 is a layer of silica which acts as an alkali blocking layer. The coated surface 30 of the self-cleaning glazing sheet 16 is positioned so that when the double glazing unit 14 is installed in a structure the coated surface maybe on the outside. The second glazing sheet 18 comprises a dark green tinted float glass substrate 32 having a pyrolytically deposited heat-reflecting coating 34 on one surface. The heat reflecting coating comprises a silicon oxycarbide underlayer and a fluorine doped tin oxide layer (of about 300 nm thickness). Alternatively, the heat reflecting layer may comprise a sputtered coating comprising one or more thin layers of silver and anti-reflection layers.

In use, radiant energy (e.g. sunlight) will pass through the double glazing unit 14 and be reflected by the heat reflecting coating 34 towards the self-cleaning glazing sheet 16 thereby increasing its temperature. The dark green glass substrate 32 of the second glazing sheet 18 will also contribute to an increase in the temperature of the self-cleaning glazing sheet 16 by absorbing radiant energy, re-radiated absorbed energy also being reflected by the heat reflecting coating 34 towards the self-cleaning glazing sheet 16.

The invention is further illustrated by the following examples which relate to self-cleaning glazing sheets comprising photocatalytically active coatings deposited on glass substrates. The glass substrates consist of a base composition having components in the approximate range of proportions indicated in Table 1, tinted by the addition of colourants in the approximate amounts described in Table 2. Usually the colourants are added on top of the base composition, in which case the composition is re normalised. Amounts are in weight percent, small amounts of other components may also be present The amount of ferrous iron (Fe²⁺) is measured in optical percent terms. The glass substrates may be made by methods well known in the glass art and clear and tinted glass substrates (with properties identical to or similar to those of the glass substrates described herein) may be purchased as staple commercial products.

**Table 1**

| **Base Composition** | | |
|---|---|---|
| | Min wt% | Max wt% |
| SiO₂ | 71.90 | 72.90 |
| CaO | 8.27 | 9.15 |
| MgO | 3.87 | 4.42 |
| Na₂O | 12.90 | 14.20 |
| K₂O | 0.02 | 0.80 |
| Fe_{z}O₃ | 0.092 | 0.136 |
| Al₂O₃ | 0.07 | 1.19 |
| SO₃ | 0.167 | 0.25 |

**Table 2**

| **Colour of tinted glass substrate** | **Fe₂O₃ (wt%)** | **Fe²⁺ (% Optical)** | **Co₃O₄ (ppm)** | **NiO (ppm)** | **Se (ppm)** | **TiO₂ (wt%)** |
|---|---|---|---|---|---|---|
| Clear | - | - | - | - | - | - |
| Grey | 0.40 | 20 | 80 | - | 23 | - |
| Bronze | 0.40 | 20 | 39 | - | 27 | - |
| Blue | 0.61 | 27 | 57 | - | - | 0.11 |
| Light Green | 0.60 | 25 | - | - | - | - |
| Dark Green | 0.90 | 25 | - | - | - | - |

The tinted glasses have amounts of iron oxide (measured as Fe₂O₃ weight percent) in the range 0.4 to 0.9 (but may have amounts in a broader range, for example, 0.1 to 0.9) and amounts of ferrous iron in the range about 20 to 30 % optical.

The optical properties of visible transmission, transmission colour (L*, a*, b*, illuminant D65) direct solar reflection and direct solar absorption for 6 mm thick samples of the clear and tinted float glass having components in the ranges described in Tables 1 and 2 are described in table 3 below. Values of visible transmission, direct solar reflection and direct solar absorption were calculated in accordance with ISO 9050. The solar values were calculated using air mass 2.

**Table 3**

| **Tint of glass substrate** | **Visible transmission (%)** | **Transmission Colour** **(D65)** | | | **Direct Solar Reflection** **(%)** | **Direct Solar Absorption** **(%)** |
|---|---|---|---|---|---|---|
| | | **L*** | **a*** | **b*** | | |
| Clear | 88.9 | 95.5 | -1.9 | 0.2 | 7.2 | 13.8 |
| Grey | 43.0 | 71.5 | 1.2 | -1.8 | 5.2 | 49.6 |
| Bronze | 48.4 | 75.1 | 3.0 | 7.9 | 5.2 | 49.2 |
| Blue | 54.9 | 79.0 | -9.5 | -10.7 | 5.0 | 60.0 |
| Light Green | 75.1 | 89.4 | -9.2 | 1.2 | 5.5 | 50.0 |
| Dark Green | 65.0 | 84.5 | -13.1 | 2.5 | 5.1 | 62.0 |

The optical properties of glass vary with thickness of the glass sample. The direct solar absorption of light green tinted glass is shown in Table 4 as a function of thickness.

**Table 4**

| **Thickness of Light** **Green Glass Substrate** **(mm)** | **Direct Solar** **Absorption** **(%)** |
|---|---|
| 4 | 39.6 |
| 2 | 24.2 |
| 1.5 | 19.1 |

The photocatalytically active coatings (deposited as described in WO00/75087) comprise a two layer coating: an underlayer of silicon oxide and a photocatalytically active layer of titanium oxide (in the anatase form). The silicon oxide under-layer may be deposited by causing a gaseous mixture of silane, oxygen, ethylene and nitrogen (for example at a flow ratio of 1:2:6:0.13) to contact and flow parallel to the glass surface in the direction of movement of the glass at a glass temperature of approximately 670°C. The thickness of the silicon oxide coating may, for example, be in the range 25 to 40 nm. The photocatalytically active titanium oxide layer may be deposited by combining gas streams comprising titanium tetrachloride in flowing nitrogen carrier gas, ethyl acetate in flowing nitrogen carrier gas and a bulk flow of nitrogen into a gaseous mixture and then causing the gaseous mixture to contact and flow over the glass surface. at a glass temperature of about 640°C. The thickness of the titanium oxide layer may, for example, be in the range 10 to 20 nm. Photocatalytically active coatings may be formed from a variety of metal compounds. Compounds which have been proposed as useful include titanium oxides, iron oxides, silver oxides, copper oxides,tungsten oxides, zinc oxides, zinc/tin oxides and strontium titanates.

Other methods of deposition of the photocatalytically active coating may be used. Photocatalytically active coatings of titanium oxide may be deposited by chemical vapour deposition (CVD) using other titanium precursors, for example titanium alkoxides (e.g. titanium ethoxide or titanium propoxide), sol gel methods (e.g. dip, flow or spin coating using alkoxide precursors in alcohols), sputtering (including reactive sputtering using a titanium metal or substoichiometric oxide target) or other coating methods. The coatings once deposited may be further processed (e.g. to increase the photocatalytic activity of the coating) for example by heat treatment. The coating may comprise coating layers other than the photocatalytically active coating to modify, for example, the hydrophilic, optical or other properties of the coating or to protect the coating (e.g. by blocking migration of alkali metal ions from the substrate if the substrate contains mobile alkali metal ions).

In the following examples, the centre pane temperature of self-cleaning glazing sheets having heating means of various kinds is calculated under different conditions (see the International Organisation for Standards ISO 9050 and/or ISO 9845). The general conditions used relate to exposure of the glazing sheets under ISO conditions and under ASHRAE ( American Society of Heating Refrigerating and Air Conditioning Engineers ) Summer conditions. These conditions are described in Table 5, below. The uncertainty in the temperature calculations is about ±1°C.

**Table 5**

| | **ISO exposure** | **ASHRAE Summer exposure** |
|---|---|---|
| Wind speed | 3.5 m/s | 3.5 m/s |
| Radiation intensity | 750 W/m² | 783 W/m² |
| External temperature | 10 °C | 31.7 °C |
| Internal temperature | 10 °C | 23.9 °C |

### Examples 1 to 5.

Examples 1 to 5 relate to single glazing sheets where the glass substrate is 6 mm thick and the photocatalytically active coating is on the outside surface (i.e. towards the radiant source). The substrates are of various tints. The temperatures of the glazing sheets are described in Table 6 for ISO and ASHRAE Summer conditions.

**Table 6**

| **Example** | **Tint of Glass Substrate** | **ISO Exposure (°C)** | **ASHRAE Summer Exposure (°C)** |
|---|---|---|---|
| 1 | Bronze | 21.9 | 41.8 |
| 2 | Grey | 21.9 | 41.8 |
| 3 | Blue | 23.9 | 44.7 |
| 4 | Light Green | 22.1 | 42.7 |
| 5 | Dark Green | 24.5 | 45.4 |

### Examples 6 to 10

Examples 6 to 10 relate to double glazing units where each of the two (glass) substrates is 6 mm thick and there is a 12.7 mm air gap between them. In each unit, the self-cleaning glazing sheet is orientated so that the photocatalytically active coating is on the outside surface (i.e. towards the radiant source). The second glazing sheet is clear. The self-cleaning glazing substrates are of various tints. The temperatures of the self-cleaning glazing sheets are described in Table 7 for ISO and ASHRAE Summer conditions.

**Table 7**

| **Example** | **Tint of Glass Substrate** | **ISO** **(°C)** | **ASHRAE Summer (°C)** |
|---|---|---|---|
| 6 | Bronze | 24.4 | 46.4 |
| 7 | Grey | 24.1 | 45.3 |
| 8 | Blue | 26.5 | 48.4 |
| 9 | Light Green | 24.4 | 46.4 |
| 10 | Dark Green | 27.1 | 49.2 |

### Examples 11 to 15.

Examples 11 to 15 relate to self-cleaning glazing sheets having a dark green glass substrate as in Example 5 with the glass substrate having a varying thickness (between 6 mm and 1 mm). The temperatures of the self-cleaning glazing sheets are described in Table 8 for ISO and ASHRAE Summer conditions together with the direct solar absorption (determined on the coated side).

**Table 8**

| **Example** | **Thickness of Dark Green Glass Substrate (mm)** | **Direct Solar Absorption (coated side) (%)** | **ISO** **(°C)** | **ASHRAE** **Summer** **(°C)** |
|---|---|---|---|---|
| 11 | 6 | 59.1 | 24.4 | 45.4 |
| 12 | 4 | 49.2 | 22 | 42 |
| 13 | 2 | 32.3 | 17.8 | 37.8 |
| 14 | 1.5 | 26.1 | 16.4 | 36.2 |
| 15 | 1 | 18.9 | 14.6 | 34.4 |

## Claims

1. A self cleaning glazing sheet **characterised by** a tinted glass substrate, a hydrophilic photocatalytically active coating layer comprising a metal compound upon one surface thereof and heating means for raising the temperature of the substrate wherein the heating means comprises a heat reflecting coating on the other surface of the glazing sheet.

2. A self cleaning glazing sheet according to claim 1 **characterised in that** the metal compound is selected from the group comprising titanium oxides, iron oxides, silver oxides, copper oxides, tungsten oxides, zinc oxides, zinc/tin oxides and strontium titanates.

3. A self cleaning glazing sheet according to either of claims 1 or 2 **characterised in that** the metal oxide is titanium oxide.

4. A self cleaning glazing sheet according to claim 3 **characterised in that** the photocatalytically active coating layer has a thickness of from 10 to 20nm.

5. A multiple glazing unit comprising a self-cleaning glazing sheet as claimed in any of the preceding claims and a second glazing sheet in opposed orientation to the self-cleaning glazing sheet.

6. A laminate **characterised in that** it comprises a first ply of a self-cleaning glazing sheet as claimed in any of claims 1 to 4 a second glass ply and a plastics ply.

7. A window comprising a self-cleaning glazing sheet as claimed in any of claims 1 to 4, a multiple glazing unit as claimed in claim 5 or a laminate as claimed in claim 6.

8. A façade for a building comprising a plurality of self-cleaning glazing sheets as claimed in any of claims 1 to 4, a plurality of multiple glazing units as claimed in claim 5 or a plurality of laminates as claimed in claim 6.

## Patentansprüche

1. Selbstreinigende Glasscheibe, **gekennzeichnet durch** ein getöntes Glassubstrat, eine hydrophile, photokatalytisch aktive Beschichtung, die eine Metallverbindung umfasst, an einer ihrer Oberflächen und eine Heizeinrichtung zur Erhöhung der Temperatur des Substrats an der anderen Oberfläche der Glasscheibe, wobei die Heizeinrichtung eine wärmereflektierende Beschichtung umfasst.

2. Selbstreinigende Glasscheibe nach Anspruch 1, **dadurch gekennzeichnet, dass** die Metallverbindung unter Titanoxiden, Eisenoxiden, Silberoxiden, Kupferoxiden, Wolframoxiden, Zinkoxiden, Zink/Zinnoxiden und Strontiumtitanaten ausgewählt ist.

3. Selbstreinigende Glasscheibe nach Anspruch 1 oder 2, **dadurch gekennzeichnet, dass** es sich bei dem Metalloxid um Titanoxid handelt.

4. Selbstreinigende Glasscheibe nach Anspruch 3, **dadurch gekennzeichnet, dass** die photokatalytisch aktive Beschichtung eine Dicke von 10 bis 20 nm aufweist.

5. Mehrfachverglasung, die eine selbstreinigende Glasscheibe, wie sie in einem der vorhergehenden Ansprüche beansprucht ist, und eine zu der selbstreinigenden Glasscheibe entgegengesetzt orientierte, zweite Glasscheibe umfasst.

6. Laminat, **dadurch gekennzeichnet, dass** es eine erste Lage einer selbstreinigenden Glasscheibe, wie sie in einem der Ansprüche 1 bis 4 beansprucht ist, eine zweite Glaslage und eine Kunststofflage umfasst.

7. Fenster, das eine selbstreinigende Glasscheibe, wie sie in einem der Ansprüche 1 bis 4 beansprucht ist, eine Mehrfachverglasung, wie sie in Anspruch 5 beansprucht ist, oder ein Laminat, wie es in Anspruch 6 beansprucht ist, umfasst.

8. Fassade für ein Gebäude, die eine Vielzahl von selbstreinigenden Scheiben für Verglasungen, wie sie in einem der Ansprüche 1 bis 4 beansprucht sind, eine Vielzahl von Mehrfachverglasungen, wie sie in Anspruch 5 beansprucht sind, oder eine Vielzahl von Laminaten, wie sie in Anspruch 6 beansprucht sind, umfasst.

## Revendications

1. Vitrage autonettoyant **caractérisé par** un substrat de verre teinté, une couche de revêtement actif par photocatalyse, hydrophile, comprenant un composé métallique sur une de ses surfaces et un moyen de chauffage pour augmenter la température du substrat, où le moyen de chauffage comprend un revêtement réfléchissant la chaleur sur l'autre surface du vitrage.

2. Vitrage autonettoyant selon la revendication 1, **caractérisé en ce que** le composé métallique est sélectionné dans le groupe consistant en oxydes de titane, oxydes de fer, oxydes d'argent, oxydes de cuivre, oxydes de tungstène, oxydes de zinc, oxydes de zinc/étain et titanates de strontium.

3. Vitrage autonettoyant selon l'une des revendications 1 ou 2, **caractérisé en ce que** l'oxyde de métal est de l'oxyde de titane.

4. Vitrage autonettoyant selon la revendication 3, **caractérisé en ce que** la couche de revêtement actif par photocatalyse a une épaisseur de 10 nm à 20 nm.

5. Unité de vitrage multiple comprenant un vitrage autonettoyant selon l'une quelconque des revendications précédentes et un second vitrage dans une orientation opposée à celle du vitrage autonettoyant.

6. Laminé **caractérisé en ce qu'**il comprend une première couche de vitrage autonettoyant selon l'une quelconque des revendications 1 à 4, une deuxième couche de verre et une couche de plastique.

7. Fenêtre comprenant un vitrage autonettoyant selon l'une quelconque des revendications 1 à 4, une unité de vitrage multiple selon la revendication 5 ou un laminé selon la revendication 6.

8. Façade pour bâtiment comprenant une pluralité de vitrages autonettoyants selon l'une quelconque des revendications 1 à 4, une pluralité d'unités de vitrage multiple selon la revendication 5 ou une pluralité de laminés selon la revendication 6.
